# EUROPEAN PATENT SPECIFICATION

(11) **EP 2 907 851 B1**
(45) Date of publication and mention of the grant of the patent: **03.05.2017**
(21) Application number: 13847811.0
(22) Date of filing: 27.09.2013
(51) Int. Cl.: C08L 69/00, C08L 25/12, C08L 51/04, C08L 67/03

(54) **THERMOPLASTIC RESIN COMPOSITION AND MOLDED PRODUCT THEREOF**
THERMOPLASTISCHE HARZZUSAMMENSETZUNG UND FORMARTIKEL DARAUS
COMPOSITION DE RÉSINE THERMOPLASTIQUE ET PRODUIT MOULÉ DE CELLE-CI

(30) Priority: 15.10.2012 JP 2012228258
(43) Date of publication of application: 19.08.2015
(73) Proprietor: ASAHI KASEI KABUSHIKI KAISHA, Tokyo 101-8101 (JP)
(72) Inventor: SUGIOKA, Akiko, Tokyo 101-8101 (JP); FUJISAWA, Tomoyuki, Tokyo 1018101 (JP)
(74) Representative: D Young & Co LLP
(86) International application number: PCT/JP2013/076436
(87) International publication number: WO 2014/061429

(56) References cited:
- WO-A1-2007/001547
- JP-A- 2004 521 968
- JP-A- 2005 527 680
- JP-A- 2006 328 355
- JP-A- 2008 546 864
- JP-A- 2008 546 865
- US-A1- 2012 129 989

## Description

### Technical Field

The present invention relates to a thermoplastic resin composition and a molded article thereof.

### Background Art

An alloy (PC/ABS) of an acrylonitrile-butadiene-styrene copolymer (ABS resin) and an aromatic polycarbonate has both satisfactory moldability derived from ABS and excellent impact resistance derived from PC, and is extremely widely used in the field wherein high impact resistance is required, more specifically, for cases for portable devices and household electrical appliances. The alloy is widely used also in the field of automobile interior parts requiring heat resistance in addition to the above properties.

Recently, the material for portions of products visible to the users, such as case or housing, has been strongly desired to be fancy. For example, jet-black (piano black) appearance is required in a certain field. In such a field, the surface of a resin material is conventionally painted.

Such a high-grade appearance is desired on the one hand; on the other hand, elimination of a painting step has been increasingly desired for the reasons such as environment pollution caused by discharge of volatile organic compounds (VOC) and high cost.

PC/ABS, however, has a problem. Since PC/ABS has excellent impact resistance and heat resistance but is a white cloudy material, whitish appearance is resulted even if a dye/pigment is added. It is therefore difficult to obtain high-grade appearance such as piano black (jet-black) appearance. For the reason, it has been desired to realize a material having not only mechanical properties such as impact resistance and heat resistance but also high-grade appearance without painting.

As a conventional technique for improving appearance of PC/ABS, for example, while PC/ABS is usually gets cloudy, Patent Literature 1 (described below) discloses a technique for obtaining translucent PC/ABS by polymerizing a vinyl monomer containing an aromatic vinyl compound in the presence of a rubber polymer, such as a styrene-butadiene polymer (having a refractive index within the range of 1.52 to 1.58), alloying the resultant with a polycarbonate to obtain a rubber reinforced copolymer resin (PC/ABS), and further adding an amorphous polyester thereto.

Patent Literature 2 discloses thermoplastic resin compositions comprising a rubbery graft copolymer, an acrylonitrile-styrene copolymer, polyethylene terephthalate and a polycarbonate.

### Citation List

### Patent Literature

Patent Literature 1: Japanese Patent Laid-Open No. 2006-328355
Patent Literature 2: US 2012/0129989 A1

### Summary of Invention

### Technical Problem

As mentioned above, general PC/ABS is opaque. Thus, even if a dye/pigment is added, a deep piano black (jet-black) appearance cannot be obtained. Even in the material described in Patent Literature 1, transparency is somewhat improved; however, it is difficult to obtain desired deep piano black (jet-black) appearance, which is yet a problem.

Highly transparent resins such as PC and PMMA/ABS can provide piano black (jet-black) appearance by adding a dye/pigment; however, PC and PMMA/ABS have drawbacks of poor fl.owability/impact resistance, and poor heat resistance, respecti.velp. In the situation, a material satisfying all properties of heat resistance, impact resistance and high-grade appearance has not yet been obtained.

Then, the present invention was made in view of the aforementioned problems in the related art. An object of the present invention is to provide a thermoplastic resin composition that can provide a molded article having high heat resistance and impact resistance in combination with high-grade appearance just by molding without painting and to provide a molded article thereof.

### Solution to Problem

The present inventors conducted intensive studies with a view to solving the above problems. As a result, the present inventors found that a molded article having high heat resistance and impact resistance in combination with high-grade appearance can be produced, just by molding without painting, from a thermoplastic resin composition comprising (A) a specific graft copolymer, (B) a polymer obtained by polymerizing a specific monomer, (C) an amorphous polyester and (D) an aromatic polycarbonate, in which the component (C) is a specific component comprising specific residues in specific amounts, provided that the total mol% of the diol components is regarded as 100 mol%. Based on the finding, the present invention was accomplished.

More specifically, the present invention is as follows.

[1]
   A thermoplastic resin composition comprising:
   (A) a graft copolymer obtained by grafting at least an aromatic vinyl monomer, a vinyl cyanide monomer and optionally , other copolymerizable monomers onto a rubber polymer;
   (B) a polymer obtained by polymerizing at least an aromatic vinyl monomer, a vinyl cyanide monomer and optionally copolymerizable monomers;
   (C) an amorphous polyester; and
   (D) an aromatic polycarbonate,
   wherein
   the component (C) comprises a diol component, a 2,2,4,4-tetramethyl-1,3-cyclobutanediol (TMCD) residue is contained in an amount of 10 to 70 mol% and a 1,4-cyclohexanedimethanol (CHDM) residue is contained in an amount of 30 to 90 mol%, provided that a total mol% of the diol components is regarded as 100 mol%.
[2]
   The thermoplastic resin composition according to [1], comprising:
   (A) a graft copolymer by grafting, onto a rubber polymer, an aromatic vinyl monomer and a vinyl cyanide monomer;
   (B) a polymer obtained by polymerizing an aromatic vinyl monomer with a vinyl cyanide monomer;
   (C) an amorphous polyester; and
   (D) an aromatic polycarbonate,
   wherein,
   the component (C) comprises a diol component, a 2,2,4,4-tetramethyl-1,3-cyclobutanediol (TMCD) residue is contained in an amount of 10 to 70 mol% and a 1,4-cyclohexanedimethanol (CHDM) residue is contained in an amount of 30 to 90 mol%, provided that the total mol% of the diol components is regarded as 100 mol%.
[3]
   The thermoplastic resin composition according to [1] wherein the graft copolymer (A) is a graft copolymer obtained by grafting, onto a rubber polymer, an aromatic vinyl monomer, a vinyl cyanide monomer and other copolymerizable monomer.
[4]
   The thermoplastic resin composition according to any one of [1] or [3], wherein the polymer (B) is a polymer obtained by polymerizing an aromatic vinyl monomer, a vinyl cyanide monomer and other copolymerizable monomer.
[5]
   The thermoplastic resin composition according to any one of [1] to [4], wherein the component (C) comprises a terephthalic acid residue in an amount of 70 to 100 mol%,
   an aromatic dicarboxylic acid residue having 20 or less carbon atoms in an amount of 0 to 30 mol%, and
   an aliphatic dicarboxylic acid residue having 16 or less carbon atoms in an amount of 0 to 10 mol%, provided that the total mol% of dicarboxylic acid components is regarded as 100 mol%.
[6]
   The thermoplastic resin composition according to any one of [1] to [5], wherein the component (C) has an inherent viscosity of 0.45 to 0.75 dL/g (ISO1628-1 1998, solution; phenol/tetrachloroethane = 60/40 (wt/wt), concentration; 0.5 g/dL, measurement temperature; 25°C).
[7]
   The thermoplastic resin composition according to any one of [1] to [6], wherein the component (D) has a weight average molecular weight of 10,000 to 40,000.
[8]
   The thermoplastic resin composition according to any one of [1] to [7], wherein the component (C) is contained in an amount of 10 to 90 mass%, and the component (D) is contained in an amount of 90 to 10 mass%, provided that a total amount of the component (C) and the component (D) is regarded as 100 mass%.
[9]
   The thermoplastic resin composition according to any one of [1] to [8], wherein a total amount of the component (A) and the component (B) is 20 to 60 mass% and the total amount of the component (C) and the component (D) is 40 to 80 mass%, provided that a total amount of the components (A) to (D) is regarded as 100 mass%.
[10]
   The thermoplastic resin composition according to any one of [1] to [9], wherein the component (D) is contained in an amount of 10 mass% to 50 mass%, provided that the total amount of the components (A) to (D) is regarded as 100 mass%.
[11]
   The thermoplastic resin composition according to any one of [1] to [10], wherein when dissolved in at least one solvent selected from tetrahydrofuran, tetrafluoroacetic acid, 1,2-dichloroethane, cyclohexanone and chlorobenzene, an insoluble matter obtained is 1 to 35 mass% and a soluble matter obtained is 65 to 99 mass%; and
   the soluble matter comprises 10 to 80 mass% of a diphenylcarbonate (DPC) residue, 1 to 10 mass% of a 2,2,4,4-tetramethyl-1,3-cyclobutanediol (TMCD) residue and 3 to 20 mass% of a 1,4-cyclohexanedimethanol (CHDM) residue, 5 to 40 mass% of a terephthalic acid (TPA) residue, 5 to 30 mass% of a styrene (ST) residue and 3 to 20 mass% of an acrylonitrile (AN) residue.
[12]
   The thermoplastic resin composition according to any one of [1] to [11], further comprising a dye.
[13]
   A molded article comprising the thermoplastic resin composition according to any one of [1] to [12].
[14]
   The molded article according to [13], wherein the molded article is not painted.
[15]
   The molded article according to [13] or [14], wherein the molded article is an automobile interior part.

### Advantageous Effects of Invention

According to the present invention, it is possible to obtain a thermoplastic resin composition that can provide a molded article having high heat resistance and impact resistance along with high-grade appearance just by molding without painting, and to obtain a molded article of the thermoplastic resin composition.

### Description of Embodiments

Now, an embodiment (hereinafter referred to as "present embodiment") for carrying out the invention will be more specifically described below. The following embodiment is just an example illustrating the present invention and will not be construed as limiting the present invention to the following content. The present invention can be appropriately modified and carried out within the gist thereof.

### [Thermoplastic resin composition]

The thermoplastic resin composition of the present embodiment is a thermoplastic resin composition comprising
(A) a graft copolymer obtained by grafting, onto a rubber polymer, at least one monomer selected from the group consisting of an aromatic vinyl monomer, a vinyl cyanide monomer and other copolymerizable monomers,
(B) a polymer obtained by polymerizing at least one monomer selected from the group consisting of an aromatic vinyl monomer, a vinyl cyanide monomer and other copolymerizable monomers,
(C) an amorphous polyester, and
(D) an aromatic polycarbonate,
in which
the component (C) comprises a diol component; and provided that the total mol% of the diol components is 100 mol%, a 2,2,4,4-tetramethyl-1,3-cyclobutanediol (TMCD) residue is contained in an amount of 10 to 70 mol% and a 1,4-cyclohexanedimethanol (CHDM) residue is contained in 30 to 90 mol%.

### ((A) Graft copolymer)

The thermoplastic resin composition of the present embodiment comprises (A) a graft copolymer (hereinafter, sometimes referred to as a graft copolymer (A), component (A) or (A)), which is obtained by graft-polymerization of at least an aromatic vinyl monomer and a vinyl cyanide monomer with a rubber polymer, and may be a graft polymer obtained by grafting other copolymerizable monomers (described later) in addition to the aromatic vinyl monomer and the vinyl cyanide monomer, onto a rubber polymer. In this case, the "other copolymerizable monomers" may be single , or two or more.

### <Rubber polymer>

Examples of the rubber polymer to be used as the component (A) include, but not particularly limited to, conjugate diene rubbers such as a polybutadiene, a butadiene-styrene copolymer, a butadiene-acrylonitrile copolymer, a butadiene-acryl copolymer, a styrene-butadiene-styrene block copolymer, a polyisoprene and a styrene-isoprene copolymer, and hydrogenated compound thereof; acrylic rubbers such as ethyl acrylate and butyl acrylate; an ethylene-α-olefin-polyene copolymer, an ethylene-α-olefin copolymer, a silicone rubber and a silicone-acryl rubber. These may be used singly or in combination of two or more thereof.

Particularly, a polybutadiene, a styrene-butadiene copolymer, a styrene-butadiene block copolymer and an acrylonitrile-butadiene copolymer are preferred in view of impact resistance and a polybutadiene is more preferred. The rubber polymer may have a uniform composition, may contain polymers different in composition or may have a composition continuously-varied.

### <Aromatic vinyl monomer>

Examples of the aromatic vinyl monomer to be used as the component (A) include, but not limited to, styrene, α-methylstyrene, o-methylstyrene, p-methylstyrene, ethylstyrene, p-t-butylstyrene and vinylnaphthalene. These may be used singly or in combination of two or more thereof. Particularly in view of heat resistance and color tone, styrene and α-methylstyrene are preferred.

### <Vinyl cyanide monomer>

Examples of the vinyl cyanide monomer to be used as the component (A) include, but not limited to, acrylonitrile and methacrylonitrile. These may be used singly or in combination of two or more thereof.

### <Other copolymerizable monomers>

Examples of the "other copolymerizable monomers" include, but not limited to, acrylates such as methyl acrylate, ethyl acrylate and butyl acrylate; methacrylates having the same substituents; unsaturated alkyl esters of acrylic acids such as an acrylic acid and methacrylic acid; N-substituted maleimide monomers such as N-phenylmaleimide and N-methylmaleimide; and glycidyl-group containing monomers such as glycidyl methacrylate.

Particularly in view of flowability, heat resistance and transparency, methyl acrylate, ethyl acrylate, butyl acrylate, methyl methacrylate, N-phenylmaleimide and glycidyl methacrylate are preferred and butyl acrylate, butyl methacrylate and N-phenylmaleimide are more preferred.

### <Constitution of graft copolymer (A)>

The graft ratio of a graft copolymer (A) is preferably 250% or less, more preferably 50 to 230%, further preferably 65 to 220%, further more preferably 80 to 200% and still further preferably 90 to 180%. If the graft ratio falls within the range, high-grade appearance, i.e., piano black (jet-black) appearance, of a molded article using the thermoplastic resin composition of the present embodiment can be obtained.

Note that the graft ratio is defined by [(A2)/(A1)] x 100 [%], provided that the mass of the rubber polymer in a graft copolymer (A) is represented by (A1), and the mass of the graft component subjected to graft-copolymerization is represented by (A2).

### <Reduced viscosity of graft copolymer (A)>

The reduced viscosity (ηsp/c) of a graft copolymer (A) is preferably 0.2 to 1.0 dL/g, more preferably 0.2 to 0.9 dL/g, further preferably 0.25 to 0.8 dL/g, further more preferably 0.3 to 0.6 dL/g, and still further preferably 0.4 to 0.6 dL/g.

Note that the reduced viscosity represents an average reduced viscosity of all components (A) in the thermoplastic resin composition of the present embodiment.

If the reduced viscosity of a graft copolymer (A) falls within the range, a thermoplastic resin composition excellent in molding flowability and impact resistance can be obtained.

The graft ratio can be determined as follows: a solvent dissolving a resin component except a graft copolymer (A) and not dissolving the graft copolymer component (A) is selected, and the insoluble matter (E) is taken out from the thermoplastic resin composition or a molded article thereof containing the graft copolymer (A) and analyzed.

More specifically, the insoluble matter (E) and soluble matter are separated by a centrifugal machine. The insoluble matter (E) is taken out and subjected to analysis by e.g., a Fourier transform infrared spectrophotometer (FT-IR). Based on the results of the analysis for the rubber polymer component and other components, the graft ratio can be obtained.

A graft copolymer (A) is present in the thermoplastic resin composition of the present embodiment in the state of being dispersed in a continuous phase of a polymer (B) (described later).

The shape of the graft copolymer (A) may be e.g., indefinite, rod, flat plate and particle. In view of impact resistance, a particle shape is preferred.

The dispersed phase of the graft copolymer (A) may be dispersed independently or in a form of aggregates, in a continuous phase of a polymer (B) (described later). In view of impact resistance of the thermoplastic resin composition of the present embodiment and a molded article thereof, it is preferable that the particles are independently dispersed.

In the thermoplastic resin composition of the present embodiment, the rubber polymer of a graft copolymer (A) is dispersed.

As for the size of the rubber polymer particles to be dispersed, the volume average particle diameter thereof is preferably 0.1 µm or more in view of a demolding effect in producing a molded article, and preferably 1.2 µm or less in view of appearance of a molded article. The volume average particle diameter is more preferably 0.15 to 0.8 µm, further preferably 0.15 to 0.6 µm and further more preferably 0.2 to 0.5 µm.

The volume average particle diameter of the rubber polymer particles dispersed can be determined as follows: an ultra-thin slice is prepared from a molded article and observed by a transmission electron microscope (TEM), and the image of an area of 50 µm × 50 µm of the ultra-thin slice is analyzed.

Note that if the rubber polymer particles are spherical, the volume average particle diameter herein corresponds to the diameter of the particles. If the rubber polymer particles are not spherical, the volume average particle diameter is specified as an average value of the major axes and the minor axes of the particles.

The rubber polymer sometimes has a phase separation of a resin component within the rubber polymer, more specifically, a non-uniform structure containing a rubber component and a resin component like a structure containing an occlusion. When a rubber polymer has a structure containing an occlusion, the volume average particle diameter of the rubber polymer is measured in the state containing an occlusion.

### <Method for producing graft copolymer (A)>

A graft copolymer (A) can be produced by a known method such as emulsion polymerization, bulk polymerization, suspension polymerization, suspension bulk polymerization and solution polymerization in accordance with a method described, for example, in Japanese Patent Laid-Open No. 07-258501.

Among these methods, when emulsion polymerization is used for the production, a method using a redox initiator/catalyst or a thermolytic initiator can be employed. The method using a redox initiator/catalyst has an advantage in that since a graft ratio is easily controlled, a thermoplastic resin composition excellent in mechanical strength can be obtained. In addition, the amount of monomer unreacted and the amount of oligomer in a thermoplastic resin composition can be kept low, since the final polymerization rate tends to be high in the method using a redox initiator/catalyst. Because of this, the method using redox initiator/catalyst is preferable.

Note that in producing a graft copolymer (A), an ungrafted copolymer (corresponding to a (B) component described later) is inevitably produced other than the graft copolymer (A).

In the Examples described later, when the graft copolymer component (A) is added, component (a), which is a component including an ungrafted component corresponding to component (B), is added. Component (a), which will be specifically described in Examples, is defined as follows: Component (a) = component (A) + ungrafted component (a component corresponding to component (B)).

### ((B) Polymer)

The thermoplastic resin composition of the present embodiment comprises a (B) polymer (hereinafter sometimes referred to as the polymer (B), component (B), (B)) obtained by polymerizing at least a vinyl cyanide monomer with an aromatic vinyl monomer or by polymerizing other copolymerizable monomers in addition to the aromatic vinyl monomer and the vinyl cyanide monomer. In this case, the other copolymerizable monomers may be single or two or more.

### <Aromatic vinyl monomer>

As the aromatic vinyl monomer to be used in the polymer (B), any one of the aromatic vinyl monomers that can be used in the aforementioned graft copolymer (A) can be used.

### <Vinyl cyanide monomer>

As the vinyl cyanide monomer to be used in the polymer (B), any one of the vinyl cyanide monomers that can be used in the aforementioned graft copolymer (A) can be used.

### <Other copolymerizable monomers>

As the "other copolymerizable monomers" to be used in the polymer (B), any one of the monomers that can be used in the aforementioned graft copolymer (A) can be used.

### <Method for producing polymer (B) >

A polymer (B) can be produced by e.g., emulsion polymerization, bulk polymerization, suspension polymerization, suspension bulk polymerization and solution polymerization.

In the polymer (B), an ungrafted component, which is produced as a by-product when component (A) is produced, is included as mentioned above, other than the polymer to be produced as the polymer (B).

### <Reduced viscosity of polymer (B)>

The reduced viscosity (ηsp/c) of a polymer (B) is preferably 0.3 to 1.0 dL/g, more preferably 0.35 to 1.0 dL/g, further preferably 0.35 to 0.9 dL/g, further more preferably 0.35 to 0.8 dL/g and still further preferably 0.40 to 0.7 dL/g.

Note that said reduced viscosity refers to the average reduced viscosity of all components (B) contained in the thermoplastic resin composition of the present embodiment.

If the reduced viscosity of the polymer (B) falls within the range, a thermoplastic resin composition excellent in balance between molding flowability and impact resistance.

The reduced viscosity of the polymer (B) can be obtained by a method such as the following method that comprises steps of : dissolving a thermoplastic resin composition or a molded article thereof in a solvent, which does not dissolve component (A) but dissolves other components, to separate component (A) first; adding a solvent, which sufficiently dissolve component (B) but does not dissolve component (C), to the remaining solution containing a mixture of component (B) and component (C) to reprecipitate component (C), thereby separating component (C) from component (B);dissolving component (B) (0.50 g from the resultant) in 2-butanone (100 mL) to obtain a solution; and measuring the time of the solution flowing through a Cannon-Fenske capillary tube at 30°C or less.

If component (B) is a copolymer consisting of an aromatic vinyl monomer and a vinyl cyanide monomer or a terpolymer consisting of an aromatic vinyl monomer, a vinyl cyanide monomer and an acrylate monomer, the content of the vinyl cyanide monomer based on the copolymer or the terpolymer (100 mass%) is preferably 15 to 45 mass%, more preferably 25 to 45 mass%, further preferably 30 to 45 mass% and further more preferably 35 to 45 mass%. If the content of the vinyl cyanide monomer falls within the range, the transparency and heat resistance of the thermoplastic resin composition of the present embodiment and a molded article thereof become satisfactory and high-grade appearance can be obtained.

Component (B), which is a constituent of the thermoplastic resin composition of the present embodiment, includes an monomer of an acrylate such as butyl acrylate and butyl methacrylate as the other copolymerizable monomer, the content thereof is preferably small in view of heat resistance.

When component (B) contains an acrylate monomer, the content of the acrylate monomer based on component (B) (100 mass%) is preferably 1 to 15 mass%, more preferably 3 to 10 mass% and further preferably 5 to 10 mass%.

The content of the vinyl cyanide monomer in component (B) can be obtained, in the same manner as mentioned above, by extracting component (B) from the thermoplastic resin composition or a molded article thereof and subjecting component (B) to analysis by a Fourier transform infrared spectrophotometer (FT-IR).

The content of the acrylate monomer in component (B) can be obtained, in the same manner as mentioned above, by extracting component (B) from the thermoplastic resin composition or a molded article thereof and subjecting component (B) to analysis by pyrolysis gas chromatography (GC-MS).

### ((C) Amorphous polyester)

The thermoplastic resin composition of the present embodiment comprises (C) an amorphous polyester (hereinafter sometimes referred to as an amorphous polyester (C), component (C) or (C)).

In the thermoplastic resin composition of the present embodiment, high-grade appearance, high impact resistance and high heat resistance can be obtained by containing component (C).

It is preferable that component (C) serve as a main component in the thermoplastic resin composition of the present embodiment. The main component means that the content thereof in the thermoplastic resin composition of the present embodiment is 10 mass% or more, preferably 20 mass% or more and more preferably 30 mass% or more.

The amorphous polyester (C) comprises a diol component.

The phrase "comprises a diol component" herein means that a diol residue is contained as a constitution unit of the amorphous polyester (C), and thus the diol component can be identified with the diol residue in the amorphous polyester (C).

It is preferable to comprise an alicyclic diol compound and/or an alicyclic diol compound residue as the diol component.

The "residue" used herein refers to any organic structure incorporated into a polymer from the corresponding monomer by polycondensation and/or an esterification reaction. Accordingly, for example, a dicarboxylic acid residue may be derived from a dicarboxylic acid monomer or its relevant acid halide, ester, salt, anhydride thereof or a mixture thereof.

The component (C) comprises a 2,2,4,4-tetramethyl-1,3-cyclobutanediol (TMCD) residue in an amount of 10 to 70 mol%, provided that the total mol% of the diol components is regarded as 100 mol%. The content is preferably 15 to 65 mol%, more preferably 20 to 50 mol% and further preferably 30 to 45 mol%. Furthermore, the component (C) comprises a 1,4-cyclohexanedimethanol (CHDM) residue in an amount of 30 to 90 mol%, provided that the total mol% of the diol components is regarded as 100 mol%. The content is preferably 35 to 85 mol%, more preferably 50 to 80 mol% and further preferably 55 to 70 mol%.

If the contents of the (TMCD) residue and the (CHDM) residue fall within the above numerical value ranges, thermoplastic resin composition of the present embodiment and a molded article thereof providing high heat resistance and high impact resistance can be obtained.

The contents of the (TMCD) residue and the (CHDM) residue can be measured by a nuclear magnetic resonance apparatus (¹H-NMR).

The component (C) comprises a dicarboxylic acid component. Examples of the dicarboxylic acid component include an aromatic dicarboxylic acid and/or an aromatic dicarboxylic acid residue, and an aliphatic dicarboxylic acid and/or an aliphatic dicarboxylic acid residue.

Examples of the aromatic dicarboxylic acid and/or aromatic dicarboxylic acid residue include terephthalic acid and/or a terephthalic acid residue, such as a terephthalic acid and a mixture of terephthalic acid and its ester.

Provided that the total mol% of dicarboxylic acids is regarded as 100 mol%, component (C) preferably comprises a terephthalic acid residue in an amount of 70 to 100 mol%, more preferably 80 to 100 mol%, further preferably 90 to 100 mol%; comprises an aromatic dicarboxylic acid residue having 20 or less carbon atoms in an amount of preferably 0 to 30 mol%, more preferably 0 to 20 mol%, further preferably 0 to 10 mol%; and comprises an aliphatic dicarboxylic acid residue having 16 or less carbon atoms in an amount of preferably 0 to 10 mol%, more preferably 0 to 5 mol% and further preferably 0 to 1 mol%. Owing to this, the thermoplastic resin composition of the present embodiment and a molded article thereof providing high heat resistance and high impact resistance can be obtained.

The contents of the terephthalic acid residue, aromatic dicarboxylic acid residue having 20 or less carbon atoms and aliphatic dicarboxylic acid residue having 16 or less carbon atoms in component (C) can be measured by ¹H-NMR.

Examples of the aliphatic carboxylic acid include, but not limited to, malonic acid, succinic acid, glutaric acid, adipic acid, pimelic acid, suberic acid, azelaic acid and dodecanedioic acid.

Provided that the total mol% of dicarboxylic acids is regarded as 100 mol%, one or more types of aforementioned various aliphatic dicarboxylic acids for modification can be contained in an amount of 10 mol% or less, 5 mol% or less, 1 mol% or less, 0.1 mol% or less, or 0.01 mol% or less.

Furthermore, as long as the effect of the present embodiment is not impaired, a dicarboxylic acid component of a polyester which is useful as an aromatic dicarboxylic acid for modification except terephthalic acid can be contained in the range of 30 mol% or less, 20 mol% or less, 10 mol% or less, 5 mol% or less or 1 mol% or less, provided that the total mol% of dicarboxylic acids is regarded as 100 mol%.

The aromatic dicarboxylic acid for modification may be linear or para-oriented or has a symmetric structure, and is preferably an aromatic dicarboxylic acid having 20 or less carbon atoms, but not limited to these.

Examples of the aromatic dicarboxylic acid for modification include, but not limited to, isophthalic acid, 4,4'-biphenyl dicarboxylic acid, 1,4-, 1,5-, 2,6-, 2,7-naphthalenedicarboxylic acids, trans-4,4'-stilbene dicarboxylic acid and esters thereof. In view of color tone and flowability, isophthalic acid is preferred.

The diol component, a constituent of component (C), may have either a cis-configuration or a trans-configuration, and a mixture thereof can be also used.

In the present embodiment, as long as the effect of the present invention is not impaired, one or more types of diols for modification except 2,2,4,4-tetramethyl-1,3-cyclobutanediol, 1,4-cyclohexanedimethanol, can be contained in an amount of 15 mol% or less, provided that the diol component is regarded as 100 mol%, more preferably 10 mol% or less and further preferably 5 mol% or less.

As the diol for modification except 2,2,4,4-tetramethyl-1,3-cyclobutanediol and 1,4-cyclohexanedimethanol, a diol having 2 to 16 carbon atoms can be mentioned.

Examples of the diol having 2 to 16 carbon atoms include, but not limited to, ethylene glycol, diethylene glycol, 1,2-propanediol, 1,3-propanediol, neopentylglycol, 1,4-butanediol, 1,5-pentanediol, 1,6-hexanediol and p-xylene glycol and a mixture thereof.

Of these, ethylene glycol is a preferable diol for modification in view of obtaining the thermoplastic resin composition of the present embodiment and a molded article thereof providing high impact resistance and high-grade appearance.

The inherent viscosity of component (C), which is measured at 25°C in a concentration of 0.5 g/dL in phenol/tetrachloroethane (60/40 (wt/wt)) in accordance with ISO1628-1 1998, is preferably 0.45 to 0.75 dL/g, more preferably, 0.45 to 0.70 dL/ and further preferably 0.50 to 0.70 dL/g, in view of impact resistance and heat resistance of the thermoplastic resin composition of the present embodiment and a molded article thereof.

The glass transition temperature [Tg] of component (C) is preferably 80 to 160°C, more preferably 90 to 140°C, further preferably 100 to 150°C and further more preferably 120 to 150°C. If the glass transition temperature of component (C) falls within the range, heat resistance can be maintained in the thermoplastic resin composition of the present embodiment and a molded article thereof.

The glass transition temperature can be measured by use of a differential scanning calorimeter (DSC).

### ((D) Aromatic polycarbonate)

The thermoplastic resin composition of the present embodiment comprises (D) an aromatic polycarbonate (hereinafter sometimes referred to as an aromatic polycarbonate (D), (D) component or (D)).

Examples of the aromatic polycarbonate (D) that can be used include, but not limited to, an aromatic homopolycarbonate and aromatic co-polycarbonate.

### <Method for producing aromatic polycarbonate (D)>

As a method for producing component (D), various methods can be used, including a phosgene method in which phosgene is blown in a bifunctional phenol compound in the presence of a hydroxide of an alkali metal and a solvent; a transesterification method in which transesterification between a bifunctional phenol compound and diethyl carbonate is performed in the presence of a catalyst; and a method of obtaining an aromatic carbonate ester by obtaining diethyl carbonate from carbon dioxide and an alcohol and reacting the diethyl carbonate with an aromatic hydroxy compound.

Examples of the bifunctional phenol compound herein include, but not limited to, 2,2'-bis(4-hydroxyphenyl)propane, 2,2'-bis(4-hydroxy-3,5-dimethylphenyl)propane, bis(4-hydroxyphenyl)methane, 1,1'-bis(4-hydroxyphenyl)ethane, 2,2'-bis(4-hydroxyphenyl)butane, 2,2'-bis(4-hydroxy-3,5-diphenyl)butane, 2,2'-bis(4-hydroxy-3,5-dipropylphenyl)propane, 1,1'-bis(4-hydroxyphenyl)cyclohexane, and 1-phenyl-1,1'-bis(4-hydroxyphenyl)ethane. Particularly, a compound having a structure based on 2,2'-bis(4-hydroxyphenyl)propane [bisphenol A], to which a functional group capable of imparting hardness is introduced, is preferred.

The bifunctional phenol compounds may be used singly or in combination of two or more thereof.

As component (D), aromatic polycarbonates produced by the above various methods may be used singly or in combination of two or more thereof.

Component (D) preferably has a weight average molecular weight within the range of 10,000 to 200,000, more preferably 10,000 to 100,000, further preferably 10,000 to 60,000, further more preferably 10,000 to 40,000 and still further preferably 20,000 to 30,000.

If the weight average molecular weight of component (D) falls within the range of 10,000 or more, impact resistance and extrusion stability can be obtained in the thermoplastic resin composition of the present embodiment. If the weight average molecular weight of component (D) falls within the range of 200,000 or less, satisfactory molding processability is provided.

If two types or more components (D) are used in combination, it is preferable that the weight average molecular weight of a mixture falls within the above range. Component (D) having a low weight average molecular weight and component (D) having a high weight average molecular weight can be used as a mixture.

The weight average molecular weight of component (D) can be calculated by gel permeation chromatography (GPC) using chloroform as a solvent based on conversion from a molecular weight calibration curve prepared by a monodispersed polystyrene standard sample.

### (Other resins)

To the thermoplastic resin composition according to the present embodiment, if necessary, other resins in addition to the above components (A) to (D) may be blended by an arbitrary method as long as the effects of the invention is not impaired.

As the other resins, for example, polyesters except component (C) are mentioned.

The content of the other resins based on the total (100 mass%) of the above components (A) to (D), in view of impact resistance, heat resistance, high-grade appearance, preferably falls within the range not beyond 25 mass%, more preferably 10 mass% or less and further preferably 5 mass% or less.

### (Contents of component (A) to component (D))

The contents of the aforementioned (A) graft copolymer, (B) polymer, (C) amorphous polyester and (D) aromatic polycarbonate of the thermoplastic resin composition of the present embodiment will be described below.

First, provided that the total amount of the component (C) and the component (D) is regarded as 100 mass%, the content of the component (C) is preferably 10 to 90 mass%, more preferably 20 to 90 mass%, further preferably 30 to 70 mass% and further more preferably 45 to 55 mass%; whereas the content of the component (D) is preferably 90 to 10 mass%, more preferably 10 to 80 mass%, further preferably 70 to 30 mass% and further more preferably 55 to 45 mass%.

If the contents of the component (C) and the component (D) fall within the ranges, the thermoplastic resin composition of the present embodiment providing high-grade appearance and heat resistance and a molded article thereof can be obtained.

Furthermore, provided that the total amount of the components (A) to (D) is regarded as 100 mass%, the total amount of the component (A) and the component (B) is preferably 20 to 60 mass%, more preferably 20 to 50 mass%, further preferably 20 to 45 mass% and further more preferably 20 to 40 mass%; the total amount of the component (C) and the component (D) is preferably 80 to 40 mass%, more preferably 80 to 50 mass%, further preferably 80 to 55 mass% and further more preferably 80 to 60 mass%.

If the total amount of the component (A) and the component (B) is 20 mass% or more, provided that the total amount of the components (A) to (D) is regarded as 100 mass%, low specific gravity, excellent flowability and excellent release property are obtained. If the total amount is 60 mass% or less, excellent transparency and heat resistance are obtained.

The content of the component (D) based on the total (100 mass%) of the components (A) to (D) is preferably 10 to 70 mass%, more preferably 10 to 60 mass%, further preferably 10 to 50 mass%, further more preferably 20 to 50 mass% and still further preferably 20 to 40 mass%.

If the content of the component (D) falls within the above numerical value range, excellent heat resistance and impact resistance can be obtained in the thermoplastic resin composition of the present embodiment and a molded article thereof.

Provided that the total amount of the components (A) to (D) is regarded as 100 mass%, if the amount of the component (D) is 10 mass% or more, heat resistance and impact resistance are excellent. If the amount is 70 mass% or less, flowability and transparency are excellent.

In the thermoplastic resin composition of the present embodiment, provided that the total amount of the component (A) and the component (B) is regarded as 100 mass%, the content of a rubber polymer in component (A) is preferably 1 to 30 mass%, more preferably 1 to 20 mass% and further preferably 3 to 15 mass%.

Provided that the total amount of component (A) and component (B) is regarded as 100 mass%, if the content of a rubber polymer in component (A) is 1 mass% or more, a thermoplastic resin composition and a molded article thereof excellent in impact resistance, release property and extrusion stability can be obtained. If the content is 30 mass% or less, a thermoplastic resin composition and a molded article thereof excellent in transparency, flowability and heat resistance can be obtained.

Provided that the total amount of components (A) to (D) is regarded as 100 mass%, the total amount of component (A) and component (B), and the amount of component (D) can be determined as follows. For example, the total amount of component (A) and component (B) can be determined by dissolving a thermoplastic resin composition or a molded article thereof in a solvent, which does not dissolve component (A) and dissolves other components, to first separate component (A), and adding a solvent, which dissolves component (B) well and does not dissolve component (C) and component (D), to the solution containing the remaining mixture of component (B), component (C) and component (D) to reprecipitate component (C) and component (D), thereby separating component (B).

The amount of component (D) can be determined by subjecting the reprecipitate of the component (C) and the component (D) to ¹H-NMR measurement.

As the solvent which does not dissolve the component (A) and dissolves other components, methylene chloride and chloroform can be used. As the solvent which dissolves the component (B) well and does not dissolve component (C) and component (D), acetone can be used. If a thermoplastic resin composition or a molded article thereof contains materials other than the above ones, the above operation can be easily carried out by selecting an appropriate solvent in consideration of each composition.

The amount of a rubber polymer in component (A) can be determined by FT-IR.

### (Content of each residue in thermoplastic resin composition)

The content of each of the monomer residue components constituting the thermoplastic resin composition of the present embodiment will be described below.

According to an aspect of the thermoplastic resin composition of the present embodiment, when a molded article of the thermoplastic resin composition is dissolved in at least one solvent selected from tetrahydrofuran, tetrafluoroacetic acid, 1,2-dichloroethane, cyclohexanone and chlorobenzene, it is preferable that the insoluble matter be 1 to 35 mass% and the soluble matter be 65 to 99 mass%; more preferable that the insoluble matter be 3 to 30 mass%, soluble matter be 60 to 97 mass%; and further preferably that the insoluble matter be 5 to 30 mass% and the soluble matter be 70 to 95 mass%.

If the insoluble matter is 1 mass% or more, impact stability can be obtained. If the insoluble matter is 35 mass% or less, excellent heat resistance can be obtained.

It is preferable that the soluble matter contains a diphenylcarbonate (DPC) residue 10 to 80 mass%, a 2,2,4,4-tetramethyl-1,3-cyclobutanediol (TMCD) residue 1 to 10 mass%, a 1,4-cyclohexanedimethanol (CHDM) residue 3 to 20 mass%, a terephthalic acid (TPA) residue 5 to 40 mass%, a styrene (ST) residue 5 to 30 mass% and an acrylonitrile (AN) residue 3 to 20 mass%.

Each residue contained in the soluble matter can be measured by ¹H-NMR.

If the content of each residue in the soluble matter falls within the above range, the thermoplastic resin composition of the present embodiment and a molded article thereof will have excellent property balance between transparency, high-grade appearance, impact resistance and heat resistance.

### (Additives)

To the thermoplastic resin composition of the present embodiment, if necessary, various additives can be blended other than the aforementioned components (A) to (D) by arbitrary methods as long as the effect of the present invention is not impaired.

Examples of the additives include a plasticizer, a lubricant, a coloring agent, an antistatic agent, various peroxides, an antioxidant, a UV absorbent, a light stabilizer and a heat stabilizer.

The contents of these additives based on a thermoplastic resin composition each preferably fall within the range not beyond 10 mass% and more preferably 5 mass% or less.

To obtain high-grade appearance, it is preferable that a dye be used as the colorant, and more preferable that several types of dyes are used. For example, organic dyes are preferably used in combination. More specifically, one or more dyes selected from red, blue, purple, yellow and green are preferably used in combination. Particularly to obtain piano black (jet-black), at least three types of organic dyes are preferably used in combination.

### (Morphology of thermoplastic resin composition)

As for morphology of the thermoplastic resin composition of the present embodiment, the composition is constituted of two phases, i.e., a continuous phase and a dispersed phase. The continuous phase is preferably formed of component (C) and component (D); whereas, the dispersed phase is preferably formed of component (A) and component (B).

In addition, component (C) and component (D) preferably form a single phase; and that the rubber polymer in component (A) present in the dispersed phase is independently dispersed like particles.

If the morphology of the thermoplastic resin composition is as mentioned above, the thermoplastic resin composition providing excellent impact resistance and heat resistance, and high-grade appearance can be obtained.

The morphology of the thermoplastic resin composition of the present embodiment can be determined by preparing an ultra-thin slice from a molded article thereof, staining the slice with osmium tetroxide and ruthenium tetroxide and observing the slice by a transmission electron microscope (TEM).

### [Method for producing thermoplastic resin composition]

Now, a method for producing the thermoplastic resin composition of the present embodiment will be described below by way of examples.

Examples of the method for producing the thermoplastic resin composition of the present embodiment include,
(1) a method using a twin screw extruder, comprising a step of melt-kneading components (A) to (D) by supplying them simultaneously to the extruder,
(2) a method using a twin screw extruder with an upstream supply port and a downstream supply port, comprising steps of: supplying component (A) and component (B) from the upstream supply port to melt-knead them, and supplying component (C) and component (D) from the downstream supply port to melt-knead them,
(3) a method using a twin screw extruder having an upstream supply port and a downstream supply port, comprising steps of: supplying component (C) and component (D) from the upstream supply port to melt-knead them, and supplying component (A) and component (B) from the downstream supply port to melt-knead them,
(4) a method using a twin screw extruder having an upstream supply port and a downstream supply port, comprising steps of supplying component (A), component (B) and component (C) from the upstream supply port to melt-knead them, and supplying component (D) from the downstream supply port to melt-knead them,
(5) a method using a twin screw extruder having an upstream supply port and a downstream supply port, comprising steps of supplying component (A), component (B) and component (D) from the upstream supply port to melt-knead them, and thereafter supplying component (C) from the downstream supply port to melt-knead them,
(6) a method using a twin screw extruder having an upstream supply port and a downstream supply port, comprising steps of supplying component (B) and component (D) from the upstream supply port to melt-knead them, and supplying component (A) and component (C) from the downstream supply port to melt-knead them,
(7) a method using a twin screw extruder having an upstream supply port and two downstream supply ports, comprising supplying component (A) and component (D) from the upstream supply port to melt-knead them, and supplying component (B) from the downstream supply port on the upstream side and component (C) from the downstream supply port on the downstream side to melt-knead them, and
(8) a method using a twin screw extruder having an upstream supply port and two downstream supply ports, comprising steps of supplying component (A) and component (C) from the upstream supply port to melt-knead them, and supplying component (B) from the downstream supply port on the upstream side and component (D) from the downstream supply port the downstream side to melt-knead them.

In view of impact resistance, the methods (1), (3), (6) and (7) are more preferable.

The preset temperature of the barrel of an extruder is preferably 240°C to 280°C. If the temperature falls within the range, the aforementioned morphology can be obtained and the effect of the present invention can be obtained without fail.

The thermoplastic resin composition of the present embodiment has properties of high heat resistance, impact resistance and high-grade appearance in combination, which are mutually incompatible, by blending component (A), component (B), component (C) and component (D).

### [Molded article]

The molded article of the present embodiment can be obtained by molding the aforementioned thermoplastic resin composition.

As a method for producing a molded article, a known method such as injection molding, seat molding, vacuum molding, blow molding, injection blow molding, inflation molding, T-die molding, press molding, extrusion molding, expansion molding and molding by flow casting can be used.

The thermoplastic resin composition of the present embodiment has a characteristic in that a molded article having high-grade appearance can be prepared just by molding without painting.

Particularly, a molded article having particularly good appearance can be obtained in injection molding.

An injection-molded article can be obtained by carrying out a general injection molding process, for example, by use of an injection molding machine at a cylinder temperature of 240°C to 270°C and a mold temperature of 60°C to 90°C.

The injection-molded article is preferably produced by heat-and-cool molding in which a mold is repeatedly heated and cooled. Thereby, the injection-molded article having high-grade appearance can be more easily obtained. This is preferably used in producing particularly a thin molded article and a molded article having a weldment. As the mold temperature in such molding, the temperature during the heating process is preferably 100°C to 180°C and the temperature during the cooling process is preferably 80°C to 50°C.

The faster the injection speed, the more preferable; however, the injection pressure is preferably not to be extremely high.

A uniform surface state of a molded article can be obtained by increasing the injection speed; whereas the degree of flatness of a rubber polymer in the surface layer of the molded article can be controlled by adjusting injection pressure. As a result, a high grade molded article having a higher degree of jet-black can be obtained.

### (Application)

The molded article of the thermoplastic resin composition of the present embodiment having high heat resistance, impact resistance and high-grade appearance in combination can be formed just by molding without painting and is suitable as, e.g., various case or housing materials, automobile interior materials and various automobile interior parts requiring design property and impact resistance.

### Examples

Now, the present invention will be more specifically described by way of specific examples such as Examples and Comparative Examples, below; however, the present invention is not limited to the following Examples.

### (Raw materials used)

[1]
   ((a) ABS (a mixture of component (A) and ungrafted component): acrylonitrile-butadiene-styrene copolymer)
      The following graft copolymers (a-1) to (a-7) were produced in accordance with the methods described in Japanese Patent Laid-Open No. 07-258501.
      (a-1) Graft copolymer (A): 70 mass% (butadiene: 71.4 mass%, graft polymer: 28.6 mass%, a graft ratio 40%), ungrafted copolymer (B): 30 mass% (content of vinyl cyanide monomer: 20 mass%, content of aromatic vinyl monomer: 80 mass%, reduced viscosity: 0.33 dL/g).
      (a-2) Graft copolymer (A): 64 mass% (butadiene: 62.5 mass%, graft polymer: 37.5 mass%, a graft ratio 60%), ungrafted copolymer (B): 36 mass% (content of vinyl cyanide monomer: 30 mass%, content of aromatic vinyl monomer: 70 mass%, reduced viscosity: 0.26 dL/g).
      (a-3) Graft copolymer (A): 56 mass% (butadiene: 71.4 mass%, graft polymer: 28.6 mass%, a graft ratio 40%), ungrafted copolymer (B): 44 mass% (content of vinyl cyanide monomer: 40 mass%, content of aromatic vinyl monomer: 60 mass%, reduced viscosity: 0.41 dL/g).
      (a-4) Graft copolymer (A): 72 mass% (butadiene: 55.6 mass%, graft polymer: 44.4 mass%, a graft ratio 80%), ungrafted copolymer (B): 28 mass% (content of vinyl cyanide monomer: 20 mass%, content of aromatic vinyl monomer: 80 mass%, reduced viscosity: 0.41 dL/g).
      (a-5) Graft copolymer (A): 76.5 mass% (butadiene: 39.2 mass%, graft polymer: 60.8 mass%, a graft ratio 155%), ungrafted copolymer (B): 23.5 mass% (content of vinyl cyanide monomer: 30 mass%, content of aromatic vinyl monomer: 70 mass%, reduced viscosity: 0.50 dL/g).
      (a-6) Graft copolymer (A): 84 mass% (butadiene: 35.7 mass%, graft polymer: 64.3 mass%, a graft ratio 180%), ungrafted copolymer (B): 16 mass% (content of vinyl cyanide monomer: 35 mass%, content of aromatic vinyl monomer: 70 mass%, reduced viscosity: 0.53 dL/g).
      (a-7) Graft copolymer (A): 64 mass% (butadiene-styrene copolymer: 62.5 mass% in which the content of styrene component is 30 mass%, graft polymer: 37.5 mass%, a graft ratio: 60%), ungrafted copolymer (B): 36 mass% (content of vinyl cyanide monomer: 30 mass%, content of aromatic vinyl monomer: 70 mass%, reduced viscosity: 0.26 dL/g).
   ((B) AS: Acrylonitrile-styrene copolymer)
      (B-1) Content of vinyl cyanide monomer: 20 mass%, content of aromatic vinyl monomer: 80 mass%, reduced viscosity: 0.67 dL/g.
      (B-2) Content of vinyl cyanide monomer: 30 mass%, content of aromatic vinyl monomer: 70 mass%, reduced viscosity: 0.58 dL/g.
      (B-3) Content of vinyl cyanide monomer: 40 mass%, content of aromatic vinyl monomer: 80 mass%, reduced viscosity: 0.47 dL/g.
      ((B) BAAS: Butyl acrylate-acrylonitrile-styrene copolymer)
      (B-4) Content of vinyl cyanide monomer: 35 mass%, content of aromatic vinyl monomer: 55 mass%, content of butyl acrylate monomer: 10 mass%, reduced viscosity: 0.42 dL/g.
[2]
   ((C) polyester)
      (C-1) trade name "Tritan TX2000" (inherent viscosity: 0.64 dL/g, Tg: 131°C, diol component: TMCD residue 36 mol%, CHDM residue 64 mol%; dicarboxylic acid component: aromatic dicarboxylic acid residue having 20 or less carbon atoms 100 mol%), manufactured by EASTMAN,
      (C-2) trade name "EASTAR GN001 (PET-G)" (inherent viscosity: 0.75 dL/g, Tg: 85°C, diol component: ethylene glycol (EG) residue 30 mol%, CHDM residue 70 mol%; dicarboxylic acid component: aromatic dicarboxylic acid residue having 20 or less carbon atoms 100 mol%), manufactured by EASTMAN.

      The inherent viscosity of the component (C) was measured in accordance with the prescription of ISO1628-1: 1998, at 25°C in phenol/tetrachloroethane of 60/40 (wt/wt) at a concentration of 0.5 g/dL.
[3]
   ((D) Aromatic polycarbonate)
      Trade name "WONDERLITE (registered trade mark) PC-110" (weight average molecular weight: 26,000), manufactured by Chimei Corporation

Evaluation methods for each physical property are as follows:

### (Evaluation method)

### <(1) Measurement of total light transmittance and Haze>

A flat plate of 5 cm × 9 cm having a thickness of 2.5 mm was obtained by injection molding using each of the thermoplastic resin compositions of Examples 1 to 11 and Comparative Examples 1 to 7 (described later) by an injection molding machine at a cylinder temperature of 250°C and a mold temperature of 60°C.

Total light transmittance and Haze were evaluated in accordance with ASTM D1003 using this flat plate.

The arithmetic average of three measurement values was calculated and regarded as the total light transmittance and Haze value.

### <(2) Measurement of Charpy impact strength>

A multipurpose test piece (Type-A) (length: 150 mm, width of a narrow portion: 10.0 mm) having a thickness of 4 mm was molded by an injection molding machine using each of the thermoplastic resin compositions of Examples 1 to 11 and Comparative Examples 1 to 7 (described later) in accordance with ISO294 at a cylinder temperature of 250°C and a mold temperature of 60°C.

The test piece obtained was processed into a shape of 80 × 10 × 4 mm and a notch is provided thereto. Charpy impact strength was measured in accordance with ISO179.

The arithmetic average of ten measurement values was calculated and regarded as the Charpy impact strength value.

### <(3) Measurement of Dupont impact value>

A flat plate of 5 cm × 9 cm having a thickness of 2.5 mm was formed by injection molding using an injection molding machine and each of the thermoplastic resin compositions of Examples 1 to 11 and Comparative Examples 1 to 7 (described later) at a cylinder temperature of 250°C and a mold temperature of 60°C.

Dopont impact was measured by an analogous method to that described in ASTM-D1709 using this flat plate and a sheet impact tester (manufactured by TOYO SEIKI KOGYO CO., LTD) at a test temperature of 23°C.

More specifically, the flat plate was fixed between a dart having a needle with a tip diameter of 12 mm and a pad having a dent with a diameter of 32 mm and a depth of 6.0 mm. Then, a load (2 kg) was dropped onto the dart from a height of 100 cm in maximum to give impact to the flat plate.

Twenty flat plates were provided, and the borderline height between a dropping height. above which a crack was developed in the flat plate and a dropping height under which no crack was developed in the flat plate was determined. Dupont impact value (kg/cm) was calculated by multiplying a load (2 kg) by the height obtained.

"The borderline height between a dropping height above which a crack was developed in the flat plate and a dropping height under which no crack was developed in the flat plate" was determined by the following manner. If a crack was developed on the plate in a first measurement where the load was dropped from a height of, for example, 50 cm, the height for the second measurement was decreased to 45 cm. If a crack was developed also on the plate at this time, the height for the third measurement was decreased to 40 cm. If no crack was developed on the plate, the height for the fourth measurement was increased to 45 cm. This operation was repeatedly performed using 20 plates. The average of the heights employed in the measurements was regarded as the height of the border between a part where a crack developed and a part where no crack developed on a flat plate.

### <(4)Measurement of distortion temperature under load (DTUL) >

A multipurpose test piece (Type A) having a thickness of 4 mm (length: 150 mm, a width of narrow portion: 10.0 mm) was molded by an injection molding machine using each of the thermoplastic resin compositions of Examples 1 to 11 and Comparative Examples 1 to 7 (described later) in accordance with ISO294 at a cylinder temperature of 250°C and a mold temperature of 60°C

The test piece obtained was processed into a shape of 80 × 10 × 4 mm, distortion temperature under load (DTUL) was measured in accordance with ISO75.

### <(5) Evaluation of jet-blackness>

Jet-blackness serving as an index of high-grade appearance was evaluated.

After dyes (red, yellow, blue, green) were kneaded into each thermoplastic resin composition of Examples 1 to 11 and Comparative Examples 1 to 7 in an amount of 1 mass % in total, a flat plate of 5 cm × 9 cm, having a thickness of 2.5 mm was formed by injection molding using an injection molding machine at a cylinder temperature of 270°C and a mold temperature of 70°C.

As the dyes, four types of dyes, i.e., red dye "C.I.: Solvent Red 179", yellow dye "C.I.: Disperse Yellow 160", blue dye "C.I.: Solvent Blue 97" and green dye "C.I.: Solvent Green 3" were used.

An L* value in the L*a*b* color appearance system of the flat plate obtained was measured by a multiple light source spectrophotometer "CM-2002" (manufactured by Konica Minolta, Inc.) under conditions of SCE (specular excluded) and D65 light source/10° viewing field.

The arithmetic average of two measurement values was calculated and regarded as the L* value.

The smaller the numerical value, the lower the luminosity, meaning that a high-grade appearance with higher level of jet-blackness was obtained.

### <(6) Measurement of contents of soluble matter and insoluble matter>

A flat plate of 5 cm × 9 cm having a thickness of 2.5 mm was formed by injection molding using an injection molding machine and each of the thermoplastic resin compositions of Examples 1 to 11 and Comparative Examples 1 to 7 (described later) at a cylinder temperature of 250°C and a mold temperature of 60°C.

The molded flat plate was dissolved in tetrafluoroacetic acid to separate soluble matter and insoluble matter from each other. The content (mass%) of the soluble matter and the content (mass%) of the insoluble matter were calculated.

### <(7) Measurement of contents of AN residue, ST residue, BA residue, DPC residue, TMCD residue, CHDM residue and TPA residue>

A flat plate of 5 cm × 9 cm having a thickness of 2.5 mm was formed by injection molding using an injection molding machine and each of the thermoplastic resin compositions of Examples 1 to 11 and Comparative Examples 1 to 7 (described later) at a cylinder temperature of 250°C and a mold temperature of 60°C.

The molded flat plate was dissolved in tetrafluoroacetic acid to obtain soluble matter.

The components of the soluble matter were analyzed by ¹H-NMR measurement to obtain the contents of an acrylonitrile (AN) residue, a styrene (ST) residue, a butyl acrylate (BA) residue, a diphenylcarbonate (DPC) residue, a 2,2,4,4-tetramethyl-1,3-cyclobutanediol (TMCD) residue, a 1,4-cyclohexanedimethanol (CHDM) residue and a terephthalic acid (TPA) residue in the soluble matter (100 mass%).

### (Example 1)

A thermoplastic resin composition was produced by use of a two-screw extruder ("TEM-58SS", manufactured by TOSHIBA MACHINE CO., LTD), as follows.

The extruder had only one supply port on the upstream side, and components (a), (B), (C) and (D) sufficiently dried to remove water were supplied from this port.

At this time, the cylinder temperature (all stages) of the extruder was set at 250°C.

The discharge amount of kneaded matter at this time was 300 kg/hour and the screw rotation number was 250 rpm.

The types and blending ratio of raw materials at this time are shown in Table 1.

The aforementioned evaluations were made using the resultant pellets and the results are shown in Table 1.

### (Examples 2, 4 to 7)

Components different in the amount of vinyl cyanide monomer and graft ratio were supplied as component (a).

In addition, the materials shown in the following Table 1 were used as component (B); and the addition amounts of component (C) and component (D) were appropriately adjusted. Pellets were obtained in the same manner as in Example 1 except the conditions above-mentioned.
The aforementioned evaluations were made using the resultant pellets and the results are shown in Table 1.

### (Example 3)

Pellets were obtained in the same conditions as in Example 1 except that components shown in the following Table 1 were used as components (a), (B), (C) and (D) and the addition amounts were adjusted.

The aforementioned evaluations were made using the resultant pellets and the results are shown in Table 1.

### (Examples 8 and 9)

Pellets were obtained in the same conditions as in Example 7 except that the ratio of component (C) to component (D) was changed.

The types and blending ratio of the raw materials at this time are shown in Table 1.

The aforementioned evaluations were made using the resultant pellets and the results are shown in Table 1.

### (Examples 10 and 11)

Pellets were obtained in the same conditions as in Example 7 except that the ratio between total amount of components (a) and (B) and total amount of components (C) and (D) was changed.

The types and blending ratio of the raw materials are shown in Table 1.

The aforementioned evaluations were made using the resultant pellets and the results are shown in Table 1.

### (Comparative Example 1)

Pellets were obtained in the same conditions as in Example 2 except that (C-2) PET-G was supplied as component (C).

The types and blending ratio of the raw materials at this time are shown in Table 1.

The aforementioned evaluations were made using the resultant pellets and the results are shown in Table 1.

### (Comparative Example 2)

Pellets were obtained in the same conditions as in Example 3 except that (C-2) PET-G was supplied as component (C).

The types and blending ratio of the raw materials at this time are shown in Table 1.

The aforementioned evaluations were made using the resultant pellets and the results are shown in Table 1.

### (Comparative Example 3)

Pellets were obtained in the same conditions as in Example 7 except that (C-2) PET-G was supplied as component (C).

The types and blending ratio of the raw materials at this time are shown in Table 1.

The aforementioned evaluations were made using the resultant pellets and the results are shown in Table 1.

### (Comparative Example 4)

Pellets were obtained in the same conditions as in Example 2 except that component (C) was not added and the blended amount of component (D) was increased.

The types and blending ratio of the raw materials at this time are shown in Table 1.

The aforementioned evaluations were made using the resultant pellets and the results are shown in Table 1.

### (Comparative Example 5)

Pellets were obtained in the same conditions as in Example 5 except that component (C) was not added and the blended amount of component (D) was increased.

The types and blending ratio of the raw materials at this time are shown in Table 1.

The aforementioned evaluations were made using the resultant pellets and the results are shown in Table 1.

### (Comparative Example 6)

Pellets were obtained in the same conditions as in Example 7 except that component (D) was not added and the blended amount of component (C) was increased.

The types and blending ratio of the raw materials at this time are shown in Table 1.

The aforementioned evaluations were made using the resultant pellets and the results are shown in Table 1.

### (Comparative Example 7)

Pellets were obtained in the same conditions as in Comparative Example 2 except that a graft copolymer using SB (styrene-butadiene copolymer) as a rubber polymer and an ungrafted component thereof were used as component (a); and component (B) was not added. The types and blending ratio of the raw materials at this time are shown in Table 1.

The aforementioned evaluations were made using the resultant pellets and the results are shown in Table 1.

**[Table 1]**

| | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|---|---|
| (a-1) ABS VCN 20 wt% Bd; 50 wt% General [mass%] | 24 | | | | | | | | | | | | | | | | | |
| (a-2) ABS VCN 30 wt% Bd; 40 wt% General [mass%] | | 30 | 15 | | | | | | | | | 30 | 15 | | 30 | | | |
| (a-3) ABS VCN 40 wt% Bd; 40 wt% General [mass%] | | | | 30 | | | | | | | | | | | | | | |
| (a-4) ABS VCN 20 wt% Bd; 40 wt% highly grafted [mass%] | | | | | 30 | | | | | | | | | | | 30 | | |
| (a-5) ABS VCN 30 wt% Bd; 30 wt% highly grafted [mass%] | | | | | | 27 | | | | | | | | | | | | |
| (a-6) ABS VCN 35 wt% Bd; 30 wt% highly grafted [mass%] | | | | | | | 20 | 20 | 20 | 10 | 30 | | | 20 | | | 20 | |
| (a-7) ABS VCN 30 wt% SB; 40 wt% General [mass%] | | | | | | | | | | | | | | | | | | 20 |
| (B-1) AS VCN 20 wt% | 16 | | | | 10 | | | | | | | | | | | 10 | | |
| (B-2) AS VCN 30 wt% | | 10 | 5 | | | 13 | | | | | | 10 | 5 | | 10 | | | |
| (B-3) AS VCN 40 wt% | | | | 10 | | | 10 | 10 | 10 | 5 | 15 | | | 10 | | | 10 | |
| (B-4) BAAS VCN 35 wt % BA 10 wt% | | | | | | | 10 | 10 | 10 | 5 | 15 | | | 10 | | | 10 | |
| (C-1) polyester Tritan [mass%] | 30 | 30 | 10 | 30 | 30 | 30 | 30 | 50 | 10 | 40 | 20 | | | | | | 60 | |
| (C-2) polyester PET-G [mass%] | | | | | | | | | | | | 30 | 10 | 30 | | | | 10 |
| (D) PC [mass%] | 30 | 30 | 70 | 30 | 30 | 30 | 30 | 10 | 50 | 40 | 20 | 30 | 70 | 30 | 60 | 60 | | 70 |
| Total amount [mass%] | 100 | 100 | 100 | 100 | 100 | 100 | 100 | 100 | 100 | 100 | 100 | 100 | 100 | 100 | 100 | 100 | 100 | 100 |
| Insoluble matte r [mass%] | 17 | 19 | 10 | 17 | 22 | 27 | 17 | 17 | 17 | 8 | 25 | 19 | 10 | 17 | 19 | 22 | 17 | 13 |
| Soluble matter [mass%] | 83 | 81 | 90 | 83 | 78 | 73 | 83 | 83 | 83 | 92 | 75 | 81 | 90 | 83 | 81 | 78 | 83 | 87 |
| AN Residue [mass%] | 5.6 | 7.7 | 3.5 | 11.2 | 4.7 | 8.0 | 10.4 | 10.4 | 10.4 | 4.7 | 17.3 | 7.7 | 3.5 | 10.4 | 7.7 | 4.7 | 10.4 | |
| ST Residue [mass%] | 22.3 | 18.0 | 8.1 | 16.7 | 18.8 | 18.6 | 16.3 | 16.3 | 16.3 | 7.4 | 27.2 | 18.0 | 8.1 | 16.3 | 18.0 | 18.8 | 16.3 | |
| BA Residue [mass%] | | | | | | | 1.2 | 1.2 | 1.2 | 0.5 | 2.0 | | | 1.2 | | | 1.2 | |
| DPC Residue [mass%] | 36.1 | 37.1 | 77.4 | 36.1 | 38.3 | 41.1 | 36.1 | 12.0 | 60.1 | 43.7 | 26.7 | 37.1 | 77.4 | 36.1 | 74.3 | 76.5 | | 87.5 |
| TMCD Residue [mass%] | 5.8 | 5.9 | 1.8 | 5.8 | 6.1 | 6.6 | 5.8 | 9.6 | 1.9 | 7.0 | 4.3 | | | | | | 11.5 | |
| CHDM Residue [mass%] | 10.8 | 11.1 | 3.3 | 10.8 | 11.5 | 12.3 | 10.8 | 18.0 | 3.6 | 13.1 | 8.0 | 6.3 | 1.9 | 6.1 | | | 21.6 | 2.1 |
| TPA Residue [mass%] | 19.5 | 20.0 | 6.0 | 19.5 | 20.7 | 22.2 | 19.5 | 32.5 | 6.5 | 23.6 | 14.4 | 24.5 | 7.3 | 23.8 | | | 38.9 | 8.3 |
| Total light transmittance (transparency) [%] | 40.0 | 36.0 | 32.2 | 35.0 | 41.0 | 47.0 | 57.5 | 73.0 | 40.0 | 58.0 | 54.2 | 25.0 | 27.1 | 29.9 | 30.1 | 29.2 | 72.7 | 30.0 |
| Haze (transparency) [%] | 99.0 | 99.0 | 99.0 | 99.0 | 98.0 | 90.0 | 79.7 | 8.0 | 92.0 | 71.6 | 85.3 | 99.0 | 99.0 | 99.0 | 99.0 | 99.0 | 24.4 | 99.0 |
| Charpy impact strength [kJ/m2] | 43 | 38 | 48 | 52 | 40 | 40 | 36 | 35 | 48 | 49 | 43 | 20 | 48 | 16 | 43 | 46 | 25 | 30 |
| Dupont impact value [kg·cm] | 180 | 175 | >200 | 181 | 175 | 180 | 196 | 190 | 196 | >200 | 192 | 155 | >200 | 185 | 180 | 183 | 185 | 120 |
| Distortion temperature under load (DTUL) [°C] | 87 | 89 | 105 | 87 | 87 | 90 | 93 | 84 | 99 | 98 | 85 | 78 | 101 | 78 | 99 | 99 | 83 | 103 |
| Jet blackness L*[-] | 2.5 | 2.9 | 4.4 | 2.9 | 3.1 | 3.5 | 1.7 | 1.0 | 3.2 | 1.8 | 2.0 | 7.0 | 5.0 | 5.4 | 6.5 | 6.0 | 1.0 | 5.4 |

The terms in above Table 1 will be described.

In (a-1), "ABS VCN 20 wt%, Bd; 50 wt%, general" refers to an acrylonitrile-butadiene-styrene copolymer with a content of a butadiene monomer unit in (a-1) of 50 mass% and a content of a vinyl cyanide monomer unit (acrylonitrile) in the ungrafted copolymer of 20 mass% and a content of a vinyl cyanide monomer unit (acrylonitrile) in the graft component (acrylonitrile and styrene) in the graft copolymer of 20 mass%. The term "general" means that a graft ratio is 60% or less. The same is applied to (a-2) and (a-3).

In (a-4), "ABS VCN 20 wt%, Bd; 40 wt%, highly grafted" refers to an acrylonitrile-butadiene-styrene copolymer with a content of a butadiene monomer unit in (a-1) of 40 mass%, a content of a vinyl cyanide monomer unit (acrylonitrile) in the ungrafted copolymer of 20 mass% and a content of a vinyl cyanide monomer unit (acrylonitrile) in the graft component (acrylonitrile and styrene) in the graft copolymer of 20 mass%. The term "highly grafted" means that a graft ratio exceeds 60%. The same is applied to (a-5) and (a-6).

In (B-1),"AS VCN 20 wt%" refers to an acrylonitrile-styrene copolymer with a content of a vinyl cyanide monomer unit (acrylonitrile) of 20 mass%. The same is applied to (B-2) and (B-3).

In (B-4), "BAAS VCN 35 wt% BA 10 wt%" refers to a butyl acrylate-acrylonitrile-styrene copolymer with a content of a vinyl cyanide monomer unit (acrylonitrile) of 35 mass% and a content of a butyl acrylate monomer unit of 10 mass%.

In Examples 1 to 11, molded articles, in which impact resistance, heat resistance, transparency and high-grade appearance (jet-black) are all satisfactorily balanced, can be obtained.

The present application is based on Japanese Patent Application No. 2012-228258 filed on October 15, 2012 with the Japan Patent Office, and the content of which is incorporated herein by reference.

### Industrial Applicability

The thermoplastic resin compositions of the present embodiment can be preferably used for various molded articles and have industrial applicability to, for example, various case or housing materials and automobile interior parts requiring good appearance and impact resistance.

## Claims

1. A thermoplastic resin composition comprising:
(A) a graft copolymer obtained by grafting at least an aromatic vinyl monomer, a vinyl cyanide monomer and optionally other copolymerizable monomers onto a rubber polymer;
(B) a polymer obtained by polymerizing at least an aromatic vinyl monomer, a vinyl cyanide monomer and optionally other copolymerizable monomers;
(C) an amorphous polyester; and
(D) an aromatic polycarbonate,
wherein
the component (C) comprises a diol component, a 2,2,4,4-tetramethyl-1,3-cyclobutanediol (TMCD) residue is contained in an amount of 10 to 70 mol% and a 1,4-cyclohexanedimethanol (CHDM) residue is contained in an amount of 30 to 90 mol%, provided that a total mol% of the diol components is regarded as 100 mol%.

2. The thermoplastic resin composition according to Claim 1, comprising:
(A) a graft copolymer by grafting, onto a rubber polymer, an aromatic vinyl monomer and a vinyl cyanide monomer;
(B) a polymer obtained by polymerizing an aromatic vinyl monomer with a vinyl cyanide monomer;
(C) an amorphous polyester; and
(D) an aromatic polycarbonate,
wherein,
the component (C) comprises a diol component, a 2,2,4,4-tetramethyl-1,3-cyclobutanediol (TMCD) residue is contained in an amount of 10 to 70 mol% and a 1,4-cyclohexanedimethanol (CHDM) residue is contained in an amount of 30 to 90 mol%, provided that the total mol% of the diol components is regarded as 100 mol%.

3. The thermoplastic resin composition according to Claim 1, wherein the graft copolymer (A) is a graft copolymer obtained by grafting, onto a rubber polymer, an aromatic vinyl monomer, a vinyl cyanide monomer and other copolymerizable monomer.

4. The thermoplastic resin composition according to Claim 1 or Claim 3, wherein the polymer (B) is a polymer obtained by polymerizing an aromatic vinyl monomer, a vinyl cyanide monomer and other copolymerizable monomer.

5. The thermoplastic resin composition according to any one of Claims 1 to 4, wherein the component (C) comprises:
a terephthalic acid residue in an amount of 70 to 100 mol%,
an aromatic dicarboxylic acid residue having 20 or less carbon atoms in an amount of 0 to 30 mol%, and
an aliphatic dicarboxylic acid residue having 16 or less carbon atoms in an amount of 0 to 10 mol%,
provided that a total mol% of dicarboxylic acid components is regarded as 100 mol%.

6. The thermoplastic resin composition according to any one of Claims 1 to 5, wherein the component (C) has an inherent viscosity of 0.45 to 0.75 dL/g (ISO1628-1: 1998, solution; phenol/tetrachloroethane = 60/40 (wt/wt), concentration; 0.5 g/dL, measurement temperature; 25°C).

7. The thermoplastic resin composition according to any one of Claims 1 to 6, wherein the component (D) has a weight average molecular weight of 10,000 to 40,000.

8. The thermoplastic resin composition according to any one of Claims 1 to 7, wherein the component (C) is contained in an amount of 10 to 90 mass%, and the component (D) is contained in an amount of 90 to 10 mass%, provided that a total amount of the component (C) and the component (D) is regarded as 100 mass%.

9. The thermoplastic resin composition according to any one of Claims 1 to 8, wherein a total amount of the component (A) and the component (B) is 20 to 60 mass% and the total amount of the component (C) and the component (D) is 40 to 80 mass%, provided that a total amount of the components (A) to (D) is regarded as 100 mass%.

10. The thermoplastic resin composition according to any one of Claims 1 to 9, wherein the component (D) is contained in an amount of 10 mass% to 50 mass%, provided that a total amount of the components (A) to (D) is regarded as 100 mass%.

11. The thermoplastic resin composition according to any one of Claims 1 to 10,
wherein when dissolved in at least one solvent selected from tetrahydrofuran, tetrafluoroacetic acid, 1,2-dichloroethane, cyclohexanone and chlorobenzene, an insoluble matter obtained is 1 to 35 mass% and a soluble matter obtained is 65 to 99 mass%; and
the soluble matter comprises 10 to 80 mass% of a diphenylcarbonate (DPC) residue, 1 to 10 mass% of a 2,2,4,4-tetramethyl-1,3-cyclobutanediol (TMCD) residue and 3 to 20 mass% of a 1,4-cyclohexanedimethanol (CHDM) residue, 5 to 40 mass% of a terephthalic acid (TPA) residue, 5 to 30 mass% of a styrene (ST) residue and 3 to 20 mass% of an acrylonitrile (AN) residue.

12. The thermoplastic resin composition according to any one of Claims 1 to 11, further comprising a dye.

13. A molded article comprising the thermoplastic resin composition according to any one of Claims 1 to 12.

14. The molded article according to Claim 13, wherein the molded article is not painted.

15. The molded article according to Claim 13 or 14, wherein the molded article is an automobile interior part.

## Patentansprüche

1. Thermoplastische Harzzusammensetzung, umfassend:
(A) ein Pfropfpolymer, das durch Pfropfen mindestens eines aromatischen Vinylmonomers, eines Vinylcyanidmonomers und gegebenenfalls anderer copolymerisierbarer Monomere auf ein Kautschukpolymer erhalten wird;
(B) ein Polymer, das durch Polymerisieren mindestens eines aromatischen Vinylmonomers, eines Vinylcyanidmonomers und gegebenenfalls anderer copolymerisierbarer Monomere erhalten wird;
(C) einen amorphen Polyester; und
(D) ein aromatisches Polycarbonat,
wobei
die Komponente (C) eine Diolkomponente umfasst, wobei ein 2,2,4,4-Tetramethyl-1,3-cyclobutandiol(TMCD)-Rest in einer Menge von 10 bis 70 Mol% enthalten ist und ein 1,4-Cyclohexandimethanol(CHDM)-Rest in einer Menge von 30 bis 90 Mol.% enthalten ist, mit der Maßgabe, dass die Summe der Mol.% der Diolkomponente als 100 Mol.% angesehen wird.

2. Thermoplastische Harzzusammensetzung nach Anspruch 1, umfassend:
(A) ein Pfropfpolymer durch Pfropfen eines aromatischen Vinylmonomers und eines Vinylcyanidmonomers auf ein Kautschukpolymer;
(B) ein Polymer, das durch Polymerisieren eines aromatischen Vinylmonomers mit einem Vinylcyanidmonomer erhalten wird;
(C) einen amorphen Polyester; und
(D) ein aromatisches Polycarbonat,
wobei
die Komponente (C) eine Diolkomponente umfasst, wobei ein 2,2,4,4-Tetramethyl-1,3-cyclobutandiol(TMCD)-Rest in einer Menge von 10 bis 70 Mol% enthalten ist und ein 1,4-Cyclohexandimethanol(CHDM)-Rest in einer Menge von 30 bis 90 Mol.% enthalten ist, mit der Maßgabe, dass die Summe der Mol.% der Diolkomponente als 100 Mol.% angesehen wird.

3. Thermoplastische Harzzusammensetzung nach Anspruch 1, wobei das Pfropfcopolymer (A) ein Pfropfcopolymer ist, das durch Pfropfen eines aromatischen Vinylmonomers, eines Vinylcyanidmonomers und anderen copolymerisierbaren Monomers auf ein Kautschukpolymer erhalten wird.

4. Thermoplastische Harzzusammensetzung nach Anspruch 1 oder Anspruch 3, wobei das Polymer (B) ein Polymer ist, das durch Polymerisieren eines aromatischen Vinylmonomers, eines Vinylcyanidmonomers und anderen copolymerisierbaren Monomers erhalten wird.

5. Thermoplastische Harzzusammensetzung nach einem der Ansprüche 1 bis 4, wobei die Komponente (C) umfasst:
einen Terephthalsäurerest in einer Menge von 70 bis 100 Mol.%,
einen aromatischen Dicarbonsäurerest mit 20 oder weniger Kohlenstoffatomen in einer Menge von 0 bis 30 Mol.%, und
einen aliphatischen Dicarbonsäurerest mit 16 oder weniger Kohlenstoffatomen in einer Menge von 0 bis 10 Mol.%,
mit der Maßgabe, dass die Summe der Mol.% der Dicarbonsäurekomponenten als 100 Mol.% angesehen wird.

6. Thermoplastische Harzzusammensetzung nach einem der Ansprüche 1 bis 5, wobei die Komponente (C) eine inhärente Viskosität von 0,45 bis 0,75 dL/g (ISO 1628-1: 1998, Lösung: Phenol/Tetrachlorethan = 60/40 (Gew./Gew.), Konzentration 0,5 g/dL, Messtemperatur 25°C) aufweist.

7. Thermoplastische Harzzusammensetzung nach einem der Ansprüche 1 bis 6, wobei die Komponente (D) ein durchschnittliches Molekulargewicht von 10.000 bis 40.000 aufweist.

8. Thermoplastische Harzzusammensetzung nach einem der Ansprüche 1 bis 7, wobei die Komponente (C) in einer Menge von 10 bis 90 Massen.% enthalten ist und die Komponente (D) in einer Menge von 90 bis 10 Massen.% enthalten ist, mit der Maßgabe, dass die Gesamtmenge der Komponente (C) und der Komponente (D) als 100 Massen.% angesehen wird.

9. Thermoplastische Harzzusammensetzung nach einem der Ansprüche 1 bis 8, wobei die Gesamtmenge der Komponente (A) und der Komponente (B) 20 bis 60 Massen.% ist und die Gesamtmenge der Komponente (C) und der Komponente (D) 40 bis 80 Massen.% beträgt, mit der Maßgabe, dass die Gesamtmenge der Komponenten (A) bis (D) als 100 Massen.% angesehen wird.

10. Thermoplastische Harzzusammensetzung nach einem der Ansprüche 1 bis 9, wobei die Komponente (D) in einer Menge von 10 bis 50 Massen.% enthalten ist, mit der Maßgabe, dass die Gesamtmenge der Komponenten (A) bis (D) als 100 Massen.% angesehen wird.

11. Thermoplastische Harzzusammensetzung nach einem der Ansprüche 1 bis 10,
wobei ein beim Lösen in mindestens einem Lösungsmittel ausgewählt aus Tetrahydrofuran, Tetrafluoressigsäure, 1,2-Dichlorethan, Cyclohexanon und Chlorbenzol erhaltenes unlösliches Material 1 bis 35 Massen.% ist und ein entsprechend erhaltenes lösliches Material 65 bis 99 Massen.% ist; und
das lösliche Material 10 bis 80 Massen.% eines Diphenylcarbonat(DPC)-Restes, 1 bis 10 Massen.% eines 2,2,4,4-Tetramethyl-1,3-cyclobutandiol(TMCD)-Rests und 3 bis 20 Massen.% eines 1,4-Cyclohexandimethanol(CHDM)-Rests, 5 bis 40 Massen.% eines Terephthalsäure(TPA)-Rests, 5 bis 30 Massen.% eines Styrol(ST)-Rests und 3 bis 20 Massen.% eines Acrylnitril(AN)-Rests umfasst.

12. Thermoplastische Harzzusammensetzung nach einem der Ansprüche 1 bis 11, ferner umfassend einen Farbstoff.

13. Geformter Gegenstand, umfassend die thermoplastische Harzzusammensetzung nach einem der Ansprüche 1 bis 12.

14. Geformter Gegenstand nach Anspruch 13, wobei der geformte Gegenstand nicht mit Farbe angestrichen ist.

15. Geformter Gegenstand nach Anspruch 13 oder 14, wobei der geformte Gegenstand ein Innenteil eines Kraftfahrzeugs ist.

## Revendications

1. Composition de résine thermoplastique comprenant :
(A) un copolymère greffé obtenu en greffant au moins un monomère vinylique aromatique, un monomère de cyanure de vinyle et éventuellement d'autres monomères copolymérisables sur un polymère caoutchouteux ;
(B) un polymère obtenu en polymérisant au moins un monomère vinylique aromatique, un monomère de cyanure de vinyle et éventuellement d'autres monomères copolymérisables ;
(C) un polyester amorphe ; et
(D) un polycarbonate aromatique,
dans laquelle
le constituant (C) comprend un constituant diol, un résidu 2,2,4,4-tétraméthyl-1,3-cyclobutanediol (TMCD) est contenu dans une quantité de 10 à 70 % en moles et un résidu 1,4-cyclohexanediméthanol (CHDM) est contenu dans une quantité de 30 à 90 % en moles, à condition que le pourcentage molaire total des constituants diols soit considéré comme 100 % en moles.

2. Composition de résine thermoplastique selon la revendication 1, comprenant :
(A) un copolymère greffé en greffant, sur un polymère caoutchouteux, un monomère vinylique aromatique et un monomère de cyanure de vinyle ;
(B) un polymère obtenu en polymérisant un monomère vinylique aromatique avec un monomère de cyanure de vinyle ;
(C) un polyester amorphe ; et
(D) un polycarbonate aromatique,
dans laquelle
le constituant (C) comprend un constituant diol, un résidu 2,2,4,4-tétraméthyl-1,3-cyclobutanediol (TMCD) est contenu dans une quantité de 10 à 70 % en moles et un résidu 1,4-cyclohexanediméthanol (CHDM) est contenu dans une quantité de 30 à 90 % en moles, à condition que le pourcentage molaire total des constituants diols soit considéré comme 100 % en moles.

3. Composition de résine thermoplastique selon la revendication 1, dans laquelle le copolymère greffé (A) est un copolymère greffé obtenu en greffant, sur un polymère caoutchouteux, un monomère vinylique aromatique, un monomère de cyanure de vinyle et un autre monomère copolymérisable.

4. Composition de résine thermoplastique selon la revendication 1 ou la revendication 3, dans laquelle le polymère (B) est un polymère obtenu en polymérisant un monomère vinylique aromatique, un monomère de cyanure de vinyle et un autre monomère copolymérisable.

5. Composition de résine thermoplastique selon l'une quelconque des revendications 1 à 4, dans laquelle le constituant (C) comprend :
un résidu acide téréphtalique dans une quantité de 70 à 100 % en moles,
un résidu acide dicarboxylique aromatique ayant 20 atomes de carbone ou moins dans une quantité de 0 à 30 % en moles, et
un résidu acide dicarboxylique aliphatique ayant 16 atomes de carbone ou moins dans une quantité de 0 à 10 % en moles,
à condition que le pourcentage molaire total de constituants acides dicarboxyliques soit considéré comme 100 % en moles.

6. Composition de résine thermoplastique selon l'une quelconque des revendications 1 à 5, dans laquelle le constituant (C) a une viscosité intrinsèque de 0,45 à 0,75 dl/g (ISO 1628-1:1998, solution : phénol/ tétrachloroéthane = 60/40 (pds/pds), concentration : 0,5 g/dl, température de mesure : 25 °C).

7. Composition de résine thermoplastique selon l'une quelconque des revendications 1 à 6, dans laquelle le constituant (D) a un poids moléculaire moyen en poids de 10 000 à 40 000.

8. Composition de résine thermoplastique selon l'une quelconque des revendications 1 à 7, dans laquelle le constituant (C) est contenu dans une quantité de 10 à 90 % en masse, et le constituant (D) est contenu dans une quantité de 90 à 10 % en masse, à condition que la quantité totale du constituant (C) et du constituant (D) soit considérée comme 100 % en masse.

9. Composition de résine thermoplastique selon l'une quelconque des revendications 1 à 8, dans laquelle la quantité totale du constituant (A) et du constituant (B) est de 20 à 60 % en masse la quantité totale du constituant (C) et du constituant (D) est de 40 à 80 % en masse, à condition que la quantité totale des constituants (A) à (D) soit considérée comme 100 % en masse.

10. Composition de résine thermoplastique selon l'une quelconque des revendications 1 à 9, dans laquelle le constituant (D) est contenu dans une quantité de 10 % en masse à 50 % en masse, à condition que la quantité totale des constituants (A) à (D) soit considérée comme 100 % en masse.

11. Composition de résine thermoplastique selon l'une quelconque des revendications 1 à 10,
dans laquelle, une fois dissoute dans au moins un solvant choisi parmi le tétrahydrofurane, l'acide tétrafluoroacétique, le 1,2-dichloroéthane, la cyclohexanone et le chlorobenzène, une matière insoluble obtenue représente 1 à 35 % en masse et une matière soluble obtenue représente 65 à 99 % en masse ; et
la matière soluble comprend 10 à 80 % en masse d'un résidu carbonate de diphényle (DPC), 1 à 10 % en masse d'un résidu 2,2,4,4-tétraméthyl-1,3-cyclobutanediol (TMCD) et 3 à 20 % en masse d'un résidu 1,4-cyclohexanediméthanol (CHDM), 5 à 40 % en masse d'un résidu acide téréphtalique (TPA), 5 à 30 % en masse d'un résidu styrène (ST) et 3 à 20 % en masse d'un résidu acrylonitrile (AN).

12. Composition de résine thermoplastique selon l'une quelconque des revendications 1 à 11, comprenant en outre un colorant.

13. Article moulé comprenant la composition de résine thermoplastique selon l'une quelconque des revendications 1 à 12.

14. Article moulé selon la revendication 13, l'article moulé n'étant pas peint.

15. Article moulé selon la revendication 13 ou 14, l'article moulé étant une pièce intérieure d'automobile.
